# EUROPEAN PATENT SPECIFICATION

(11) **EP 2 258 122 B1**
(45) Date of publication and mention of the grant of the patent: **19.10.2011**
(21) Application number: 08873652.5
(22) Date of filing: 21.11.2008
(51) Int. Cl.: H04W 4/18, H04W 4/14, H04M 1/725, H04N 1/00

(54) **DATA COMMUNICATION OF FIXED SIZE DATA PACKAGES**
DATENKOMMUNIKATION MIT DATENPAKETEN VON FESTGELEGTER GRÖSSE
COMMUNICATION DE DONNÉES DE PAQUETS DE DONNÉES DE TAILLE FIXE

(30) Priority: 28.03.2008 US 40421 P
(43) Date of publication of application: 08.12.2010
(73) Proprietor: CarryQuote AG, 6343 Rotkreuz (CH)
(72) Inventor: STENNICKE, Michael, CH-6343 Rotkreuz (CH); SELIN, Sergei, Plantation FL 33317 (US)
(74) Representative: Maiwald Patentanwalts GmbH
(86) International application number: PCT/EP2008/066002
(87) International publication number: WO 2009/118064

(56) References cited:
- EP-A- 1 755 351
- US-A- 6 078 820
- US-A1- 2005 176 445

## Description

### Field of the invention

The present invention relates to data communication of fixed size data packages. In particular, the present invention relates to a communication system for data communication, a transmitting station for a communication system, a receiving station for a communication system, a method for data communication with a communication system, a program element and a computer-readable medium.

### Technological background of the invention

In mobile communication, when transmitting information which comprises a relatively big amount of data, such data is usually transmitted with the use of the Internet. The data to be transmitted may comprise graphical information which for example relates to market changes and fluctuations. Such information is critical to many businesses, especially in today's global market that operates all day, every day. Business people, including financial analysts, traders, and corporate executives, increasingly rely on ubiquitous connectivity to remain informed of market events that are important, or could impact, their business.

The introduction of mobile devices capable of wireless communication with data servers (e.g. web servers) has increased the ability of a user to achieve near-constant awareness of market data. However, such ability has increased the users' reliance on network connectivity and bandwidth. More useful data, and the display of data to which users are accustomed, such as market graphs and charts, require substantial network bandwidth to transmit the graphical images of the data. Additionally, as the amount of data being transmitted increases, the reliability of the devices network connection becomes increasing important to ensure timely delivery of complete messages as well as preventing time outs of transmission of large quantities of data, thus resulting in incomplete and useless data.

For example, the user can access market data using a web browser application running on the mobile device. However, web browsing can require substantial bandwidth to transfer not only the graphics associated with the market data, but also all other graphics on a web page, such as advertisements and navigation images. Furthermore, use of a web browser requires a user's active participation in the process, including seeking out market data, reloading/refreshing data, and other actions.

Alternatively, market data can be sent to the user's wireless device by email. An email message typically contains textual information about the current market conditions or changes in market conditions. However, textual information alone does not provide the user with the same quality of information as graphical representations of the data. The email message can include graphical data, such as a market chart, as an attachment (e.g., image file). However, the receipt of image attachments results in network problems similar to those encountered with web browsing from the mobile device.

Market data can also be transmitted to users through Short Message Service (SMS). SMS messages are typically more reliable and can be transmitted in a more timely fashion since there is less data to transmit over the network. However, SMS messages are limited to 1120 bits of data and thus are limited to a predetermined maximum size that is incapable of conveying the quality of information achievable through more robust communication protocols, such as those used for email and the world-wide-web.

EP 1 755 351 A2 relates to a wireless protocol system for use between an internet content region and a wireless carrier region which includes a mobile station. A server in the internet content region includes a template for summarizing web page content and generates a web content summary page in SMS format. The web content summary page is transmitted to the mobile station which displays the web content summary page as a function of a template which is installed in the mobile device.

### Summary of the invention

It is an object of the invention to convey high quality information, for example about market data, to users of mobile devices in a manner that is independent of the available bandwidth and connectivity of the mobile device.

This object is achieved by the subject-matter of the independent claims. Further exemplary embodiments are evident from the dependent claims and the following description.

The present invention provides a communication system for data communication, a receiving station, a transmitting station, a method for data communication, a program element and a computer-readable medium according to the features of the independent claims. Further embodiments of the present invention are set forth in the dependent claims.

It should be noted, that features which are in the following discussed with reference to the communication system may, for example, also be implemented into the method, the program element or the computer-readable medium, and vice versa.

According to an exemplary embodiment of the invention, a communication system for data communication is provided, the communication system comprising a transmitting station and a receiving station. The transmitting station is adapted for encoding data into a data package of a fixed maximum size and for transmitting the data package to the receiving station. The receiving station is adapted for decoding and processing the data package on the basis of a decoding procedure in combination with processing information. The data package belongs to a particular data group and the processing information relates to the particular data group and is stored in the receiving station.

In other words, the transmitting station is able to generate a data package which comprises information in which a user is interested in. This fixed size data package is then transmitted to the users receiving station and is there decoded and further processed. In order to be able to interpret and display the information contained in the data package in the right way, the receiving station needs further information, i.e. the processing information which is stored in the receiving station. Thus, the processing information does not need to be transmitted from the transmitting station to the receiving station.

This processing information directly relates to the information stored in the data package and enables the receiving station to, for example, display the information on a computer screen or some other display.

If the receiving station would not have the correct processing information, a correct display of the information inside the receiving station would not be possible.

In other words, not the whole information needed for displaying the data is transmitted, but only part of it. The other part of the information which is needed for displaying the data is already stored at the receiving station and thus does not need to be transmitted to the receiving station.

When the transmitting station generates the data package (i.e. the encoding procedure), data for the user is divided into two portions. The first portion is encoded into the data package and the second portion is not encoded and not even transmitted to the receiving station of the user. However, the second portion may be identified by a certain identifier inside the data package in order to allow the receiving station to identify that particular second portion in its own data storage. After decoding the data package, this second portion is used for further processing of the data in order to allow for a full display of the information.

Thus, financial and graphical data may be delivered to the receiving station without having to engage the usual data connection of the receiving station, i.e. the Internet.

According to another exemplary embodiment of the present invention, the decoding and processing of the data package comprises displaying of textual and graphical information derived from the data package in combination with the processing information.

According to another exemplary embodiment of the present invention, the processing information used for processing of the data package is selected from the receiving station on the basis of an identification of the received data package.

According to another exemplary embodiment of the present invention, the receiving station is adapted for displaying the data as a data plot, wherein the processing information comprises information about a range of an x-axis, a range of a y-axis, a labelling of the x-axis and a labelling of the y-axis of the data plot.

According to another exemplary embodiment of the present invention, the data package of the fixed maximum size is an SMS data package.

According to another exemplary embodiment of the present invention, the transmitting station is a server.

According to another exemplary embodiment of the present invention, the receiving station is a mobile device.

According to another exemplary embodiment of the present invention, the data comprises information about an activity of a market.

According to another exemplary embodiment of the present invention, the transmitting station is adapted for monitoring the activity of the market and for detecting a predefined trigger event in the activity of the market, wherein, after detection of the trigger event, the transmitting station encodes data which relates to the trigger event into the data package and transmits the encoded data package to the receiving station.

According to another exemplary embodiment of the present invention, the transmitting station comprises a memory for storing raw data, wherein the raw data is processed before being encoded into the data package.

According to another exemplary embodiment of the present invention, the transmitting station is adapted for determining a minimum value and a maximum value of the data and for determining a data range for displaying the data in the receiving station on the basis of the minimum value and the maximum value.

According to another exemplary embodiment of the present invention, the receiving station is adapted for decoding and processing the data package on the basis of the determined data range.

According to another exemplary embodiment of the present invention, the encoding of the data results in a data package relating to an array of 2-digit hexadecimal numbers.

According to another exemplary embodiment of the present invention, the encoding of the data is performed on the basis of user defined encoding parameters. According to another exemplary embodiment of the present invention, the data package relates a two-dimensional data set. Thus, the market date may be displayed in form of a two-dimensional graph.

According to another exemplary embodiment of the present invention, the data package relates to a three-dimensional data set. Thus, the market date may be displayed in form of a three-dimensional representation.

According to another exemplary embodiment of the present invention, a transmitting station for a communication system is provided, wherein the transmitting station is adapted for encoding data into a data package of a fixed maximum size and for transmitting the data package to a receiving station, wherein the receiving station is adapted for decoding and processing the data package on the basis of a decoding procedure in combination with processing information, wherein the data belongs to a particular data group and wherein the processing information relates to the particular data group and is stored in the receiving station.

According to another exemplary embodiment of the present invention, a receiving station for a communication system is provided, wherein the receiving station is adapted for decoding and processing a data package of a fixed maximum size, the data package comprising data encoded by a transmitting station, on the basis of a decoding procedure in combination with processing information, wherein the data belongs to a particular data group and wherein the processing information relates to the particular data group and is stored in the receiving station.

According to another exemplary embodiment of the present invention, a method for data communication with a communication system is provided, wherein the method comprises the steps of encoding data into a data package of a fixed maximum size and transmitting the data package to a receiving station, and decoding and processing the data package on the basis of a decoding procedure in combination with processing information in the receiving station, wherein the data belongs to a particular data group, and wherein the processing information relates to the particular data group and is stored in the receiving station.

According to another exemplary embodiment of the present invention, a program element for data communication with a communication system is provided, which, when being executed by a first processor of a transmitting station, is adapted to encode data into a data package of a fixed maximum size and to transmit the data package to a receiving station, wherein the data package is adapted for being decoded and processed on the basis of a decoding procedure in combination with processing information in the receiving station, wherein the data belongs to a particular data group and wherein the processing information relates to the particular data group and is stored in the receiving station.

According to another exemplary embodiment of the present invention, a program element for data communication with a communication system is provided, which, when being executed by a second processor of a receiving station, is adapted to carry out a decoding and processing of a data package on the basis of a decoding procedure in combination with processing information, wherein the data package comprises encoded data and is of a fixed maximum size and has been transmitted to the receiving station by a transmitting station, wherein the data belongs to a particular data group, and wherein the processing information relates to the particular data group and is stored in the receiving station.

According to another exemplary embodiment of the present invention, a computer-readable medium is provided, in which a computer program for data communication with a communication system is stored which, when being executed by a first processor of a transmitting station, is adapted to carry out the above-mentioned method steps.

According to another exemplary embodiment of the present invention, a further computer-readable medium is provided, in which a computer program for data communication with a communication system is stored which, when being executed by a second processor of a receiving station, is adapted to carry out the above-mentioned method steps.

This may provide for a system and a method for communication over a wireless network of optimized market data encoded in messages having a fixed maximum message size, and more particular to the communication of optimized market data encoded using short message service (SMS) and the expansion and decoding of that data into textual and graphical information on a mobile device.

These and other aspects of the present invention will become apparent from and elucidated with reference to the embodiments described hereinafter.

Exemplary embodiments of the present invention will be described in the following, with reference to following drawings.

### Brief description of the drawings

Figure 1 illustrates a network topology over which the present invention is operable;
Figure 2 illustrates one embodiment of a representation the information conveyed to a mobile device in accordance with the present invention;
Figure 3 illustrates a further embodiment of a graphical representation the information conveyed graph to a mobile device in accordance with the present invention;
Figure 4 illustrates a flow diagram of the process executed external to the mobile device in accordance with one embodiment of the present invention; and
Figure 5 illustrates a flow diagram of the process executed on the mobile device in accordance with one embodiment of the present invention.
Figure 6A shows a schematic representation of an encoding procedure according to an exemplary embodiment of the present invention.
Figure 6B shows a schematic representation of a decoding procedure according to an exemplary embodiment of the present invention.

### Detailed description of exemplary embodiments

The illustration in the drawings is schematically. In different drawings, similar or identical elements are provided with the same reference numerals.

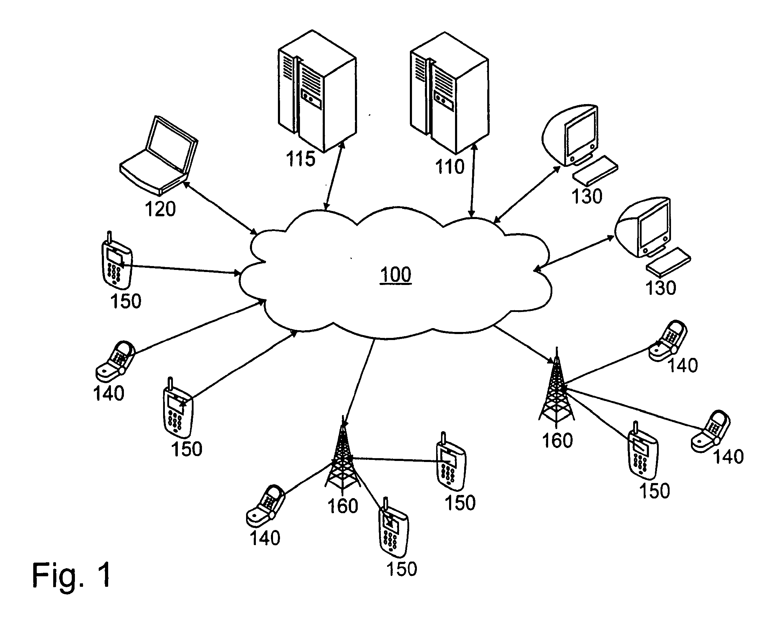

Referring now to the drawings, Figure 1 illustrates a network topology over which the present invention is operable. Typically a network 100, such as the Internet enables communication between various computer systems and computing devices. The network can include servers, such as market data server 110 and wireless server/gateway 115. In relevant part, the market data server 110 gathers information about various financial markets or changes in those markets and processes the information. The processed information or raw information can be redistributed over the network 100 to various desktop computers 130 or laptop computers 120 typically over high throughput and reliable network connections such as Ethernet, IEEE 802.11 [a, b, g, n, etc.], or others known in the art.

The market data server 110 can also communicate over the network to mobile devices such as cellphones 140 or personal digital assistants 150. Communications to mobile devices are carried over wireless links, for example using radio communication towers 160. However, wireless links typically have lower bandwidth and unreliable connectivity. To provide high quality graphical information concerning market conditions to mobile devices (140 and 150), the server 110 can optimize and encode the underlying data being communicated so as to fit in a single message of know maximum capacity (e.g., an SMS message).

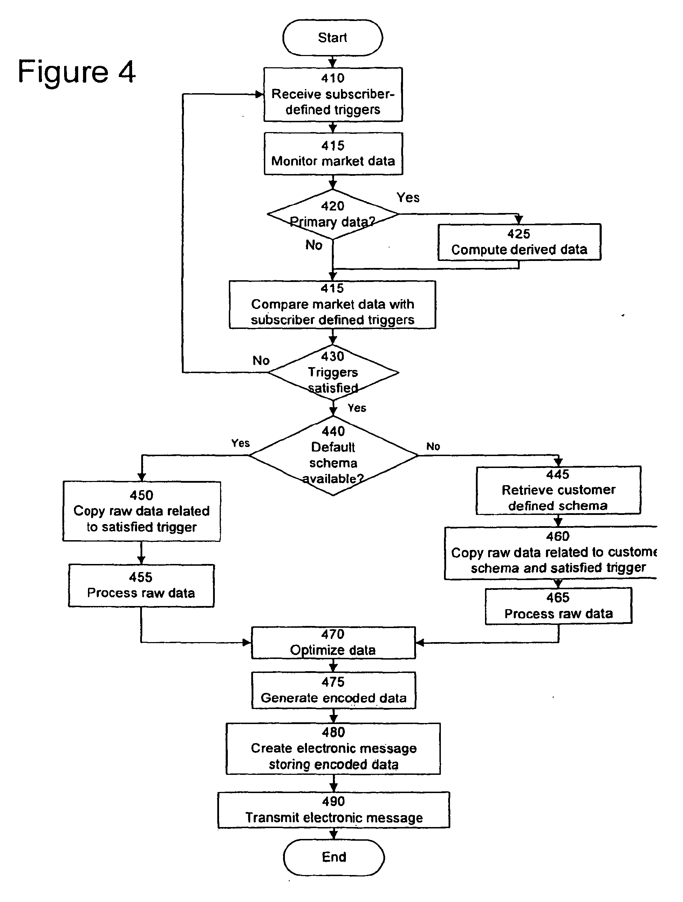

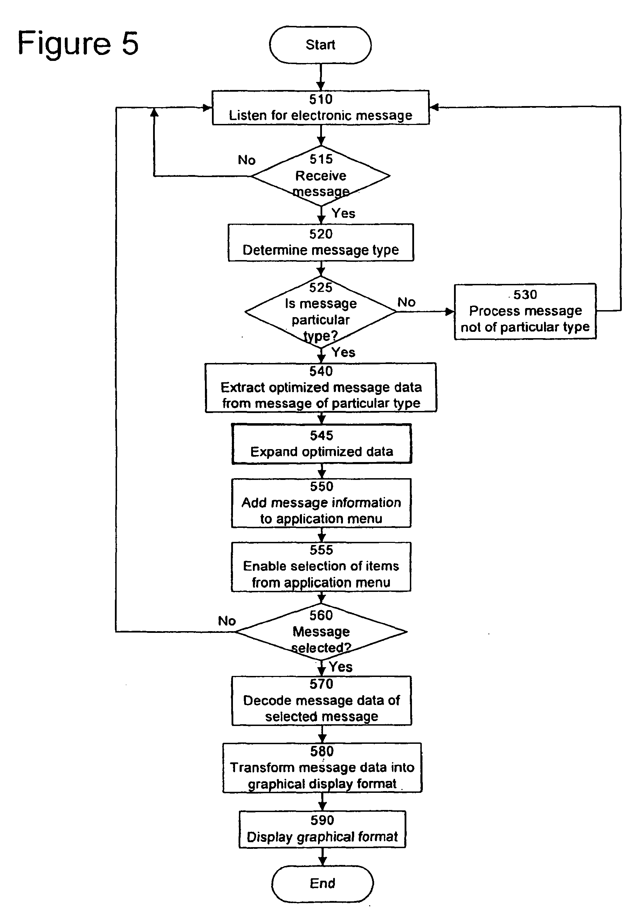

The optimization routine utilized by the system constructed in accordance with a preferred embodiment is not a standard compression algorithm or a method of lossy image encoding, Rather, because certain information is known and common to market data and how it is converted to a graphical display, these commonalities are exploited by the optimization routine to optimize and encode the underlying raw data so as to occupy a maximum size message. The mobile devices (140 and 150) can then execute an application that is aware of the data optimization and encoding used by the server 110 to decode and expand the data into its raw form and thus transform the data on the mobile device into a graphical presentation of the type a user is accustomed (e.g., 1-day, 5-day, or 3-month chart). A more detailed discussion of the optimization and encoding is made below with reference to Figures 4 and 5.

When a mobile device receives a message, it is tested to determine the type of message. If it is of the type sent by the market server 110 and encoding market data, a series of operations are performed on the message to obtain the information encoded therein. Once the information is obtained, the mobile application running on the mobile device presents the user with the message on the mobile device. Alternatively, the mobile application adds the item to a list of messages which can be presented to the user when convenient.

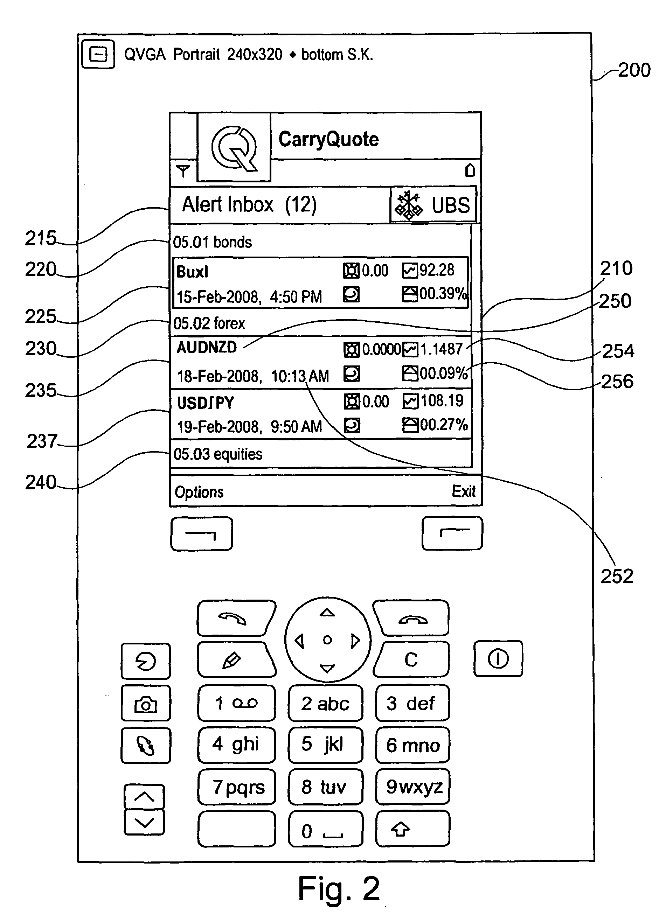

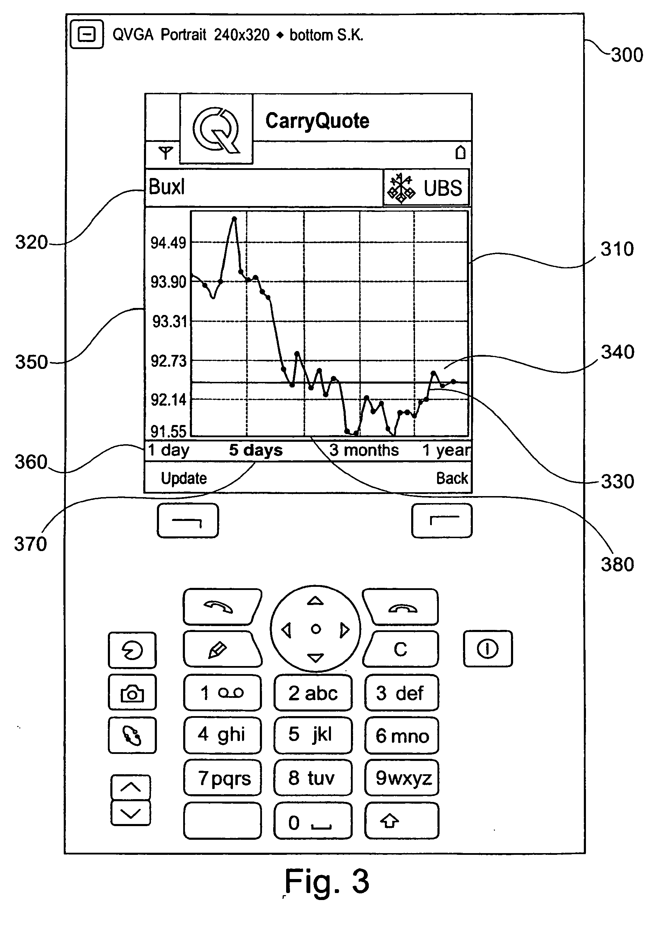

Figure 2 illustrates one embodiment of a representation the information conveyed to a mobile device in accordance with the present invention. As illustrated, the mobile device 200 includes a screen on which a list of messages 210 is displayed. The list is recognizable to one of ordinary skill in the art as similar to an email inbox. Each item in the list is selectable and results in the display of further information stored in the item representing the message, as discussed with respect to Figure 3.

The list is labeled 215 as an "Alert Inbox" and can include an indication of the number of messages stored (e.g., 12 messages). The list can be sorted or grouped by a variety of information such as date received, alphabetical by instrument name, or by category.

Figure 2, illustrates the message items grouped by category, and labels each category accordingly (e.g., Bonds 220, Foreign Exchange ("Forex") 230, and Equities 240). Each message item corresponding to a particular category is listed below the category headings. In Figure 2, message 225 is listed under Bonds 220 and messages 235 and 237 are listed below Forex 230.

The message item list can also provide a brief summary of the information contained in the message through the message list 210. For example, message 235 includes and indication that the market instrument 250 ("AUDNZD") is the subject of the message. Additionally, message 235 includes a timestamp 252 indicating the time and date that the message was generated. Further the market value 254 and the percentage change 256 from the opening of the market are also provided in the message list.

Once a message is selected from the list 210, the user is presented with a graphical display charting the market instrument over a specific period of time, for example as illustrated in Figure 3. The graph 310 is display on the screen of the mobile device 300 and includes an indication of which market instrument is being displayed 320. The line 330 includes a plot of several datapoints representing the value of the market instrument, as measured by the y-axis 350, at a given time, as measured by the x-axis 350. As discussed below with respect to steps 450-470 of Figure 4, the data in the message is encoded in view of the minimum and maximum value of the market instrument. Thus, the y-axis 350 can efficiently maximize the use of the screen space of the mobile device 300 by assigning the lowest value of the y-axis 350 and the highest value of the y-axis 350 to the minimum and maximum value of the market instrument respectively. The datapoints being plotted can be emphasized, for example, by using a dot 340 or other geometric shape that has a diameter greater than the width of the line plotting the market instrument activity. The chart 310 preferably includes a display of the time scale 360 of the chart 310 and optionally enables the user to switch between specific scales 370.

Figure 4 illustrates a flow diagram of the process 400 in accordance with an embodiment of the present invention that can be executed on one or more servers and gateways to monitor market data, optimize portions of the data, and transmit the data to the mobile device. While the process 400 is illustrated as a single linear flow, it would be understood by one of ordinary skill in the art that this process can occur in a multi-process or multi-threaded environment or in an event driven architecture effectively enabling various steps to occur independently of one another. However, for ease of discussion and illustration, process 400 (and also process 500) is treated as a linear process.

At step 410, the system can receive subscriber defined triggers. A trigger identifies a market instrument and a market condition (e.g., limit) about which a subscriber is concerned. For example, the subscriber can indicate that if the price of gold goes above a particular price, the user wishes to be notified of this. Triggers can be simple conditions, such as the previous example, or include complex Boolean expression requiring data concerning multiple instruments and/or data derived from market conditions (e.g., volatility).

Market data is monitored at step 415 and can be received from various exchanges or collected from a single source that has already aggregated data from multiple exchanges. The monitored market data is checked to determine if it is primary data (i.e., the data is used in calculating other derived indicators and metrics) at step 420. If it is primary data, at step 425, the system computes the derived data.

As market data is received and derived data is computed, at step 430 the system compares the updated data with the subscriber defined triggers, and at step 435, the system determines which, if any, of the triggers have been satisfied.

Optionally, the user can define a set of subscriber-preferences which can be used to determine what data is transmitted to the mobile device. If at step 440 the default schema is available, the system operates based on a set of default schema. If however, the default schema is not available, or it has been superseded by a customer-defined schema, the customer-defined schema is retrieved at step 445.

For this discussion, it is assumed the default schema specifies a 5-day chart having 6 horizontal grid-lines (i.e., vertical steps) and 40 datapoints plotted on the chart and displayed on the screen in an area that is 120 pixels high by 200 pixels wide. Previously discussed Figure 3 illustrates a chart produces in accordance with this schema. It would be understood that these parameters can be modified according to a user's preferences and the number of bits available in the fixed capacity messaging being sent to the mobile device.

At step 450 raw data related to the trigger is copied to a memory location so it can be processed without modifying the system's raw data. Preferably, the following information is stored in the working memory: instrument name, timestamp trigger was satisfied, user-defined trigger condition, actual trigger condition, directional change (i.e., increasing or decreasing), percentage change from market open, instrument display format (e.g., number of significant digits), and an array of "tik-data" representing the market data aggregated into the desired time periods. Once this information is copied so as to represent a snapshot of the market at the timestamp the trigger was satisfied, the system can begin optimizing and encoding the data for transmission within a fixed capacity message (e.g., SMS).

At step 455 the system processes the raw data copied to the working memory. First, the minimum and maximum value of the array of tik-data is computed to determine the range of the array. The range is divided by the number of horizontal gridlines so as to determine the value of the vertical step of the chart. The system further determines the vertical scale represented by each pixel of the chart (i.e., (maximum tik-data - minimum tik-data)/number-of-pixels).

At step 470, the tik-data array is optimized for transmission in the SMS message. In one embodiment, the minimum value of the tik-data array is subtracted from each value of the tik-data array resulting in an array of floating point numbers, each representing the difference between the origin of the chart (i.e., the minimum) and the datapoint. This floating point difference is then converted to the number of pixels by dividing the floating point number by the scale of each pixel and rounding to the nearest integer. Finally, each datapoint (now representing a number of pixels) is converted into a 2-digit hexadecimal number, which enables the system to encode for a chart size of up to 256 pixels (i.e., 2⁸).

Thus, the tik-data is converted from an array of floating point numbers each requiring multiple characters for representation (e.g., six characters for number having the format ###.##) to an array of two-digit hexadecimal numbers each of which can be represented by two characters or eight bits.

If a customer defined schema is available, the necessary raw data is copied to the working memory location at step 460. The customer defined schema can add additional descriptive data (e.g., number of shares traded), alter the size of the screen, number of vertical steps, historical length of the chart, and number of samples of data. The number of samples must be limited appropriately to accommodate the fixed maximum capacity of the message. Additionally, certain values of screen-size can affect the number of samples chosen (e.g., if the pixel height of the screen can not be represented by two hexadecimal numbers). However, large screen sizes can also be accommodated by determining scale of every two (or three) pixels in the chart, rather than a single pixel discussed above.

The raw data is processed using the customer-defined schema at step 465 in a manner similar to that discussed above with respect to step 455 except using the customer defined parameters where appropriate. At step 470, the data is optimized as discussed above.

At step 475, the hexadecimal array representation of the tik-data data is encoded for transmission as an SMS message. In accordance with one format of SMS, each message can be a maximum of 160 7-bit characters. In accordance with this format, each 2-digit hexadecimal number is encoded as a 2-character string. Thus, by way of example, a chart having 40 samples is represented by 560 bits.

Some SMS messages, however, can be encoded in binary as 140 8-bit characters. If the SMS message allows for 8-bit characters, at step 475, each 2-digit hexadecimal number is converted to its 8-bit equivalent (i.e., each digit is represented by 4-bits). It should be noted that 8-bit representation allows a chart having 40 samples to be represented by 320 bits. Thus, additional samples or other data such as a second graphical chart can be included in an SMS message having 8-bit binary messages.

Once the data is encoded, the payload or text of the SMS message is generated at step 480. Fields within the message can be delimited by a special character such as a comma. Additionally, a prefix and/or suffix are preferably added to the SMS message to indicate to any recipient that the message is of a particular type (e.g., the prefix "@$" and suffix "$@"). Thus, the payload of a 7-bit encoded SMS-message may appear as follows:

| | |
|---|---|
| SMS Message | @$USDJPY,0803201739101.44,101.45,1003212,101.32,0.155 110C6E458A09235ECA1B110C6E458A09235ECAIB110C6E 458A09235ECA1B1 10C6E458A09235ECA1B$@ |
| Prefix | ©$ |
| Market Instrument | USDJPY |
| Timestamp of the triggering condition (YYMMDDHHMM) | 0803201739 |
| Requested Triggering Condition | 101.44 |
| Actual Triggering Condition | 101.45 |
| Direction of the market | 1 (up) |
| Percentage change | 0032 (3.2%) |
| Display format | 12 |
| The y-axis origin | 101.32 |
| The vertical step of the y-axis | 0.155 |
| The encoded 40 datapoints of the chart | 110C6E458A09235ECA1B110C6B458A09235ECA1B110C6 E458A09235ECA1B110C6E458A09235ECA1B |
| Suffix | $@ |

At step 490, the SMS message is transmitted over the wireless communication network 100 to the mobile device. The transmission is typically performed by a gateway 115 that accepts the SMS payload and requests a corresponding SMS message be sent over the appropriate wireless network to the mobile device. The interface between the server 110 and the gateway 115 can be via email, http(s), or other known protocol.

Once the SMS message is generated and transmitted, it is received and processed by the mobile device. Figure 5 illustrates a flow diagram of the process 500 in accordance with an embodiment of the present invention that can be executed on a mobile device executing an application programmed to understand the format of the SMS message.

At step 510 the mobile device listens for electronic messages and determines whether one has been received at decision 515. If a message has been received, at step 520, the type of the message is determined, for example by examining the prefix and/or suffix of the message. The type of a message can be indicated by a prefix, a suffix, or a combination thereof. For the present illustration we discuss a data structure having both a prefix and a suffix. If at step 525, it is determined the message does not have the prefix and/or suffix of a message associated with an optimized market data message, the mobile device hands off processing of the message to another application, such as allowing for standard SMS handling by the mobile device.

However, if the message has the prefix and/or suffix of a message associated with an optimized market data message, the mobile device proceeds to extract the optimized message data from the SMS. At step 545 the extracted data is expanded by converting the encoded information into textual or numerical data. The application executing on the mobile device is configured to recognize the format of the encoded SMS message with reference to application data stored on the mobile device and is thus able to decode the information and determine the market instrument, timestamp, market direction, requested trigger level, and the actual trigger level.

At step 550, the expanded message information is preferably added as an item to the list of messages received by the mobile device. The mobile device can appropriately categorize and sort the messages based on the expanded data and its own pro gram code executing locally on the mobile device. Further, at step 555, the application enables selection of one of the items in the message list.

If a message is selected at step 560, the mobile device proceeds to decode the chart-data (i.e., encoded tik-data). The process described above with respect to step 470 is essentially reversed to produce an array of datapoints. It should be noted that decoding the chart-data can be performed after the message is selected at step 560 or in response to the determination that the message is of an optimized corresponding market-data type at step 540.

The array of data points can then be transformed into a graphical display at step 580 in a manner well-known in the art. The origin of the y-axis and the vertical step-size are encoded in the SMS and thus dictate the scale of the y-axis. Additionally, the time-span of the chart is either known (i.e., the default value) or encoded in the SMS message thereby defining the parameters of the x-axis. Finally, the tik-data of the market instrument is arranged in a known order (e.g., chronologically) within the SMS and the type of market instrument determines the sampling rate of the tik-data, thereby enabling the encoded information to be plotted. Once the chart is defined, it can be displayed at step 590.

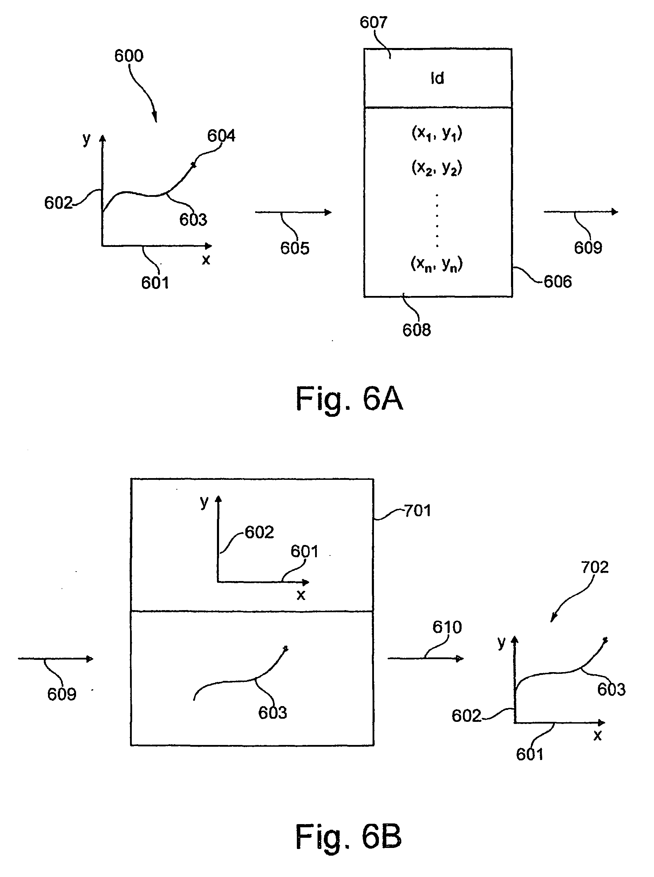

Figure 6A shows a representation of an encoding procedure which is performed by a transmitting station. In a first step, the market activity is tracked and if a certain trigger event 604 happens, the corresponding data is identified. Such data may for example be a certain chart 603 which is represented by means of an appropriate coordinate system with x-axis 601 and y-axis 602. For example, the x-axis 601 represents the time (for example 5 days) and the y-axis 602 represents corresponding stock prices.

This whole information is divided into two parts. One part, which relates to the curve 603 is encoded into the data package 606 of a fixed maximum size (see step 605). This information is stored inside the container 608 of the package 606. The second part of the information, which refers to the coordinate system 601, 602 and may comprise further information in order to allow for a correct graphical display of the information is not stored in the data package 606. However, the data package 606 also comprises an identifier 607 which relates to the coordinate system and the further information which is not included into the data package. In step 609 the transmitting station transmits the data package to a receiving station.

Figure 6B shows the decoding process inside the receiving station. In step 609 the receiving station receives the data package which is decoded into the curve 603.

However, since no further graphical information is present in the data package, the receiving station reads the identifier 607 and loads the corresponding additional information 601, 602 from its memory. This information is identified with the help of the identifier 607.

In step 610, the receiving station combines all information 601, 602 and 603, represented in box 701, into the final representation 702, which corresponds to the original representation 600 (see figure 6A).

It should be noted that the term "comprising" does not exclude other elements or steps and the "a" or "an" does not exclude a plurality and that a single processor or system may fulfil the functions of several means or units resulted in the claims. Also elements described in association with different embodiments may be combined.

It should also be noted, that any reference signs in the claims shall not be construed as limiting the scope of the claims.

## Claims

1. Communication system (100) for data communication, the communication system (100) comprising:
a transmitting station (110) for encoding data into a data package (606) of a fixed maximum size and for transmitting the data package to a receiving station (140);
a receiving station (140) for decoding and processing the data package (606) on the basis of a decoding procedure in combination with processing information (601, 602);
wherein the data belongs to a particular data group;
wherein the processing information relates to the particular data group and is stored in the receiving station (140);
wherein the data comprises information about an activity of a market;
wherein the receiving station (140) is adapted for displaying the data as a data plot (702);
wherein the processing information (601, 602) comprises information about a range of an x-axis, a range of a y-axis, a labelling of the x-axis and a labelling of the y-axis of the data plot (702).

2. The communication system (100) of claim 1,
wherein decoding and processing of the data package (606) comprises displaying of textual and graphical information derived from the data package (606) in combination with the processing information (601, 602).

3. The communication system (100) of claim 1 or 2,
wherein the processing information (601, 602) used for processing of the data package (606) is selected from the receiving station (140) on the basis of an identification (607) of the received data package.

4. The communication system (100) of one of the preceding claims,
wherein the data package (606) of the fixed maximum size is an SMS data package.

5. The communication (100) system of one of the preceding claims,
wherein the transmitting station (110) is a server.

6. The communication system (100) of one of the preceding claims,
wherein the receiving station (140) is a mobile device.

7. The communication system (100) of claim 1,
wherein the transmitting station (110) is adapted for monitoring the activity of the market and for detecting a predefined trigger event in the activity of the market;
wherein, after detection of the trigger event, the transmitting station (110) encodes data which relates to the trigger event into the data package (606) and transmits the encoded data package to the receiving station (140).

8. The communication system (100) of one of the preceding claims,
wherein the transmitting station (110) comprises a memory for storing raw data;
wherein the raw data is processed before being encoded into the data package (606).

9. The communication system (100) of one of the preceding claims,
wherein the transmitting station (110) is adapted for determining a minimum value and a maximum value of the data and for determining a data range for displaying the data in the receiving station (140) on the basis of the minimum value and the maximum value.

10. The communication system (100) of claim 9,
wherein the receiving station (140) is adapted for decoding and processing the data package (606) on the basis of the determined data range.

11. The communication system (100) of claim 9 or 10,
wherein the encoding of the data results in a data package (606) relating to an array of 2-digit hexadecimal numbers.

12. The communication system (100) of one of the preceding claims,
wherein the encoding of the data is performed on the basis of user defined encoding parameters.

13. The communication system (100) of one of the preceding claims,
wherein the data package relates a two-dimensional data set.

14. The communication system (100) of one of the preceding claims,
wherein the data package relates to a three-dimensional data set.

15. Receiving station (140) for a communication system (100),
wherein the receiving station (140) is adapted for decoding and processing a data package (606) of a fixed maximum size, the data package comprising data encoded by a transmitting station, on the basis of a decoding procedure in combination with processing information (601, 602);
wherein the data belongs to a particular data group;
wherein the processing information (601, 602) relates to the particular data group and is stored in the receiving station;
wherein the data comprises information about an activity of a market;
wherein the receiving station (140) is adapted for displaying the data as a data plot (702);
wherein the processing information (601, 602) comprises information about a range of an x-axis, a range of a y-axis, a labelling of the x-axis and a labelling of the y-axis of the data plot (702).

16. A method for data communication with a communication system (100), the method comprising the steps of:
encoding data into a data package (606) of a fixed maximum size and transmitting the data package to a receiving station (140);
decoding and processing the data package (606) on the basis of a decoding procedure in combination with processing information (601, 602) in the receiving station (140);
displaying the data as a data plot (702) in the receiving station (140);
wherein the data belongs to a particular data group;
wherein the processing information (601, 602) relates to the particular data group and is stored in the receiving station (140);
wherein the data comprises information about an activity of a market;
wherein the processing information (601, 602) comprises information about a range of an x-axis, a range of a y-axis, a labelling of the x-axis and a labelling of the y-axis of the data plot (702).

17. A program element for data communication with a communication system (100), which, when being executed by a second processor of a receiving station (140), is adapted to carry out the step of:
decoding and processing a data package (606) on the basis of a decoding procedure in combination with processing information (601, 602);
displaying the data as a data plot (702) in the receiving station (140);
wherein the data package (606) comprises encoded data and is of a fixed maximum size and has been transmitted to the receiving station (140);
wherein the data belongs to a particular data group;
wherein the processing information (601, 602) relates to the particular data group and is stored in the receiving station (140);
wherein the data comprises information about an activity of a market;
wherein the processing information (601, 602) comprises information about a range of an x-axis, a range of a y-axis, a labelling of the x-axis and a labelling of the y-axis of the data plot (702).

18. A computer-readable medium, in which a computer program for data communication with a communication system (100) is stored which, when being executed by a second processor of a receiving station (140), is adapted to carry out the step of:
decoding and processing a data package (606) on the basis of a decoding procedure in combination with processing information (601, 602);
displaying the data as a data plot (702) in the receiving station (140);
wherein the data package (606) comprises encoded data and is of a fixed maximum size and has been transmittedto the receiving station (140);
wherein the data belongs to a particular data group;
wherein the processing information (601, 602) relates to the particular data group and is stored in the receiving station;
wherein the data comprises information about an activity of a market;
wherein the processing information (601, 602) comprises information about a range of an x-axis, a range of a y-axis, a labelling of the x-axis and a labelling of the y-axis of the data plot (702).

## Patentansprüche

1. Kommunikationssystem (100) für die Datenkommunikation, umfassend:
eine Sendestation (110) zum Codieren von Daten in ein Datenpaket (606) einer festgelegten maximalen Größe und zum Senden des Datenpakets an eine Empfangsstation (140);
eine Empfangsstation (140) zum Decodieren und Verarbeiten des Datenpakets (606) auf Basis einer Decodierprozedur in Kombination mit Verarbeitungsinformation (601, 602);
wobei die Daten zu einer bestimmten Datengruppe gehören;
wobei sich die Verarbeitungsinformation auf eine bestimmte Datengruppe bezieht und in der Empfangsstation (140) gespeichert wird;
wobei die Daten Information über eine Aktivität eines Marktes beinhalten;
wobei die Empfangsstation (140) angepasst ist, die Daten als Datenplot (702) anzuzeigen;
wobei die Verarbeitungsinformation (601, 602) Information über einen Bereich einer X-Achse, einen Bereich einer Y-Achse, eine Kennzeichnung einer X-Achse und eine Kennzeichnung einer Y-Achse des Datenplots (702) beinhaltet.

2. Kommunikationssystem (100) nach Anspruch 1,
wobei das Decodieren und Verarbeiten des Datenpakets (606) das Anzeigen von Textund Grafikinformationen beinhaltet, die von dem Datenpaket (606) in Kombination mit der Verarbeitungsinformation (601, 602) abgeleitet wurden.

3. Kommunikationssystem (100) nach Anspruch 1 oder 2,
wobei die zum Verarbeiten des Datenpakets (606) benutzte Verarbeitungsinformation (601, 602) von der Empfangsstation (140) auf Basis einer Identifikation (607) des empfangenen Datenpakets ausgewählt wird.

4. Kommunikationssystem (100) nach einem der vorhergehenden Ansprüche,
wobei das Datenpaket (606) der festgelegten maximalen Größe ein SMS-Datenpaket ist.

5. Kommunikationssystem (100) nach einem der vorhergehenden Ansprüche,
wobei die Sendestation (110) ein Server ist.

6. Kommunikationssystem (100) nach einem der vorhergehenden Ansprüche,
wobei die Empfangsstation (140) ein mobiles Endgerät ist.

7. Kommunikationssystem (100) nach Anspruch 1,
wobei die Sendestation (110) angepasst ist, die Aktivität des Marktes zu überwachen und ein vordefiniertes Triggerereignis in der Aktivität des Marktes zu detektieren;
wobei nach dem Detektieren des Triggerereignisses die Sendestation (110) Daten in das Datenpaket (606) codiert, die sich auf das Triggerereignis beziehen, und das codierte Datenpaket an die Empfangsstation (140) sendet.

8. Kommunikationssystem (100) nach einem der vorhergehenden Ansprüche,
wobei die Sendestation (110) einen Speicher zum Speichern von Rohdaten umfasst;
wobei die Rohdaten vor dem Codieren in das Datenpaket (606) verarbeitet werden.

9. Kommunikationssystem (100) nach einem der vorhergehenden Ansprüche,
wobei die Sendestation (110) angepasst ist, einen Mindestwert und einen Höchstwert der Daten und einen Datenbereich zum Anzeigen der Daten in der Empfangsstation (140) auf Basis des Mindestwerts und des Höchstwerts zu bestimmen.

10. Kommunikationssystem (100) nach Anspruch 9,
wobei die Empfangsstation (140) angepasst ist, das Datenpaket (606) auf Basis des bestimmten Datenbereichs zu decodieren und zu verarbeiten.

11. Kommunikationssystem (100) nach Anspruch 9 oder 10,
wobei das Codieren der Daten ein Datenpaket (606) ergibt, das sich auf eine Reihe zweistelliger hexadezimaler Zahlen bezieht.

12. Kommunikationssystem (100) nach einem der vorhergehenden Ansprüche,
wobei das Codieren der Daten auf Basis von benutzerdefinierten Codierparametern durchgeführt wird.

13. Kommunikationssystem (100) nach einem der vorhergehenden Ansprüche,
wobei sich das Datenpaket auf einen zweidimensionalen Datensatz bezieht.

14. Kommunikationssystem (100) nach einem der vorhergehenden Ansprüche,
wobei sich das Datenpaket auf einen dreidimensionalen Datensatz bezieht.

15. Empfangsstation (140) für ein Kommunikationssystem (100),
wobei die Empfangsstation (140) angepasst ist, ein Datenpaket (606) einer festgelegten maximalen Größe zu decodieren und zu verarbeiten, welches Datenpaket Daten beinhaltet, die von einer Sendestation auf Basis einer Decodierprozedur in Kombination mit Verarbeitungsinformation (601, 602) codiert wurden;
wobei die Daten zu einer bestimmten Datengruppe gehören;
wobei sich die Verarbeitungsinformation auf eine bestimmte Datengruppe bezieht und in der Empfangsstation (140) gespeichert wird;
wobei die Daten Information über eine Aktivität eines Marktes beinhalten;
wobei die Empfangsstation (140) angepasst ist, die Daten als Datenplot (702) anzuzeigen;
wobei die Verarbeitungsinformation (601, 602) Information über einen Bereich einer X-Achse, einen Bereich einer Y-Achse, eine Kennzeichnung einer X-Achse und eine Kennzeichnung einer Y-Achse des Datenplots (702) beinhaltet.

16. Verfahren für eine Datenkommunikation mit einem Kommunikationssystem (100), welches Verfahren folgende Schritte umfasst:
Codieren der Daten in ein Datenpaket (606) einer festgelegten maximalen Größe und Senden des Datenpakets an eine Empfangsstation (140);
Decodieren und Verarbeiten des Datenpakets (606) auf Basis einer Decodierprozedur in Kombination mit Verarbeitungsinformation (601, 602) in der Empfangsstation (140);
Anzeigen der Daten als Datenplot (702) in der Empfangsstation (140);
wobei die Daten zu einer bestimmten Datengruppe gehören;
wobei sich die Verarbeitungsinformation auf eine bestimmte Datengruppe bezieht und in der Empfangsstation (140) gespeichert wird;
wobei die Daten Information über eine Aktivität eines Marktes beinhalten;
wobei die Verarbeitungsinformation (601, 602) Information über einen Bereich einer X-Achse, einen Bereich einer Y-Achse, eine Kennzeichnung einer X-Achse und eine Kennzeichnung einer Y-Achse des Datenplots (702) beinhaltet.

17. Programmelement für die Datenkommunikation mit einem Kommunikationssystem (100), welches bei Ausführung durch einen zweiten Prozessor einer Empfangsstation (140) angepasst ist, folgende Schritte durchzuführen:
Decodieren und Verarbeiten des Datenpakets (606) auf Basis einer Decodierprozedur in Kombination mit Verarbeitungsinformation (601, 602);
Anzeigen der Daten als Datenplot (702) in der Empfangsstation (140);
wobei das Datenpaket (606) codierte Daten beinhaltet und von einer festgelegten maximalen Größe ist und an die Empfangsstation (140) gesendet wurde;
wobei die Daten zu einer bestimmten Datengruppe gehören;
wobei sich die Verarbeitungsinformation (601, 602) auf eine bestimmte Datengruppe bezieht und in der Empfangsstation (140) gespeichert ist;
wobei die Daten Information über eine Aktivität eines Marktes beinhalten;
wobei die Verarbeitungsinformation (601, 602) Information über einen Bereich einer X-Achse, einen Bereich einer Y-Achse, eine Kennzeichnung einer X-Achse und eine Kennzeichnung einer Y-Achse des Datenplots (702) beinhaltet.

18. Computerlesbares Medium, in welchem ein Computerprogramm für die Datenkommunikation mit einem Kommunikationssystem (100) gespeichert ist, welches bei Ausführung durch einen zweiten Prozessor einer Empfangsstation (140) angepasst ist, folgende Schritte durchzuführen:
Decodieren und Verarbeiten eines Datenpakets (606) auf Basis einer Decodierprozedur in Kombination mit Verarbeitungsinformation (601, 602);
Anzeigen der Daten als Datenplot (702) in der Empfangsstation (140);
wobei das Datenpaket (606) codierte Daten beinhaltet und von einer festgelegten maximalen Größe ist und an die Empfangsstation (140) gesendet wurde;
wobei die Daten zu einer bestimmten Datengruppe gehören;
wobei sich die Verarbeitungsinformation auf eine Datengruppe bezieht und in der Empfangsstation (140) gespeichert ist;
wobei die Daten Information über eine Aktivität eines Marktes beinhalten;
wobei die Verarbeitungsinformation (601, 602) Information über einen Bereich einer X-Achse, einen Bereich einer Y-Achse, eine Kennzeichnung einer X-Achse und eine Kennzeichnung einer Y-Achse des Datenplots (702) beinhaltet.

## Revendications

1. Système de communication (100) pour la communication de données, le système de communication (100) comportant :
une station de transmission (110) pour coder des données dans un paquet de données (606) d'une taille maximale fixe et pour transmettre le paquet de données à une station de réception (140),
une station de réception (140) pour décoder et traiter le paquet de données (606) sur la base d'une procédure de décodage en combinaison avec une information de traitement (601, 602),
dans lequel les données appartiennent à un groupe particulier de données,
dans lequel l'information de traitement se rapporte au groupe particulier de données et est mémorisée dans la station de réception (140),
dans lequel les données comportent une information concernant une activité d'un marché,
dans lequel la station de réception (140) est adaptée pour présenter les données sous forme d'une représentation de données (702),
dans lequel l'information de traitement (601, 602) comporte des informations concernant une plage d'un axe x, une étendue d'un axe y, un marquage de l'axe x et un marquage de l'axe y de la représentation de données (702).

2. Système de communication (100) selon la revendication 1,
dans lequel le décodage et le traitement du paquet de données (606) comportent la présentation d'informations textuelles et graphiques dérivées du paquet de donnés (606) en combinaison avec les informations de traitement (601, 602).

3. Système de communication (100) selon la revendication 1 ou 2,
dans lequel les informations de traitement (601, 602) utilisées pour le traitement du paquet de données (606) sont sélectionnées à partir de la station de réception (140) sur la base d'une identification (607) du paquet de données reçu.

4. Système de communication (100) selon l'une des revendications précédentes,
dans lequel le paquet de données (606) de taille maximale fixe est un paquet de données de SMS.

5. Système de communication (100) selon l'une des revendications précédentes,
dans lequel la station de transmission (110) est un serveur.

6. Système de communication (100) selon l'une des revendications précédentes,
dans lequel la station de réception (140) est un dispositif mobile.

7. Système de communication (100) selon la revendication 1,
dans lequel la station de transmission (110) est adaptée pour surveiller l'activité du marché et pour détecter un événement de déclenchement prédéfini dans l'activité du marché,
dans lequel, après détection de l'événement de déclenchement, la station de transmission (110) code des données qui se rapportent à l'événement de déclenchement dans le paquet de données (606) et transmet le paquet de données codées à la station de réception (140).

8. Système de communication (100) selon l'une des revendications précédentes,
dans lequel la station de transmission (110) comporte une mémoire pour mémoriser des données brutes,
dans lequel les données brutes sont traitées avant d'être codées dans le paquet de données (606).

9. Système de communication (100) selon l'une des revendications précédentes,
dans lequel la station de transmission (110) est adaptée pour déterminer une valeur minimale et une valeur maximale des données et pour déterminer une plage de données pour présenter les données dans la station de réception (140) sur la base de la valeur minimale et de la valeur maximale.

10. Système de communication (100) selon la revendication 9,
dans lequel la station de réception (140) est adaptée pour décoder et traiter le paquet de données (606) sur la base de la plage de données prédéterminée.

11. Système de communication (100) selon la revendication 9 ou 10,
dans lequel le codage des données produit un paquet de données (606) se rapportant à un groupe de nombres hexadécimaux à deux chiffres.

12. Système de communication (100) selon l'une des revendications précédentes,
dans lequel le codage des données est réalisé sur la base de paramètres de codage définis par un utilisateur.

13. Système de communication (100) selon l'une des revendications précédentes,
dans lequel le paquet de données se rapporte à un ensemble de données bidimensionnelles.

14. Système de communication (100) selon l'une des revendications précédentes,
dans lequel le paquet de données se rapporte à un ensemble de données tridimensionnelles.

15. Station de réception (140) pour un système de communication (100),
la station de réception (140) étant adaptée pour décoder et traiter un paquet de données (606) d'une taille maximale fixe, le paquet de données comportant des données codées par une station de transmission, sur la base d'une procédure de décodage en combinaison avec une information de traitement (601, 602),
dans lequel les données appartiennent à un groupe particulier de données, dans lequel l'information de traitement (601, 602) se rapporte au groupe particulier de données et est mémorisée dans la station de réception,
dans lequel les données comportent une information concernant une activité d'un marché,
dans lequel la station de réception (140) est adaptée pour présenter les données sous forme d'une représentation de données (702),
dans lequel l'information de traitement (601, 602) comporte une information concernant une plage d'un axe x, une étendue d'un axe y, un marquage de l'axe x et un marquage de l'axe y de la représentation de données (702).

16. Procédé de communication de données avec un système de communication (100), le procédé comportant les étapes consistant à :
coder des données dans un paquet de données (606) d'une taille maximale fixe et transmettre le paquet de données à une station de réception (140),
décoder et traiter le paquet de données (606) sur la base d'une procédure de décodage en combinaison avec une information de traitement (601, 602) dans la station de réception (140),
présenter les données sous la forme d'une représentation de données (702) dans la station de réception (140),
dans lequel les données appartiennent à un groupe particulier de données,
dans lequel l'information de traitement (601, 602) se rapporte au groupe particulier de données et est mémorisée dans la station de réception (140),
dans lequel les données comportent une information concernant une activité d'un marché,
dans lequel l'information de traitement (601, 602) comporte une information concernant une plage d'un axe x, une plage d'un axe y, un marquage de l'axe x et un marquage de l'axe y de la représentation de données (702).

17. Elément de programme pour une communication de données avec un système de communication (100) qui, lorsqu'il est exécuté par un second processeur d'une station de réception (140), est adapté pour mettre en oeuvre les étapes consistant à :
décoder et traiter un paquet de données (606) sur la base d'une procédure de décodage en combinaison avec une information de traitement (601, 602),
présenter les données sous la forme d'une représentation de données (702) dans la station de réception (140),
dans lequel le paquet de données (606) comporte des données codées et est de taille maximale fixe et a été transmis à la station de réception (140),
dans lequel les données appartiennent à un groupe particulier de données,
dans lequel l'information de traitement (601, 602) se rapporte au groupe particulier de données et est mémorisée dans la station de réception (140),
dans lequel les données comportent une information concernant une activité d'un marché,
dans lequel l'information de traitement (601, 602) comporte une information concernant une plage d'un axe x, une plage d'un axe y, un marquage de l'axe x et un marquage de l'axe y de la représentation de données (702).

18. Support lisible par ordinateur, dans lequel est mémorisé un programme d'ordinateur pour une communication de données avec un système de communication (100), qui, lorsqu'il est exécuté par un second processeur d'une station de réception (140), est adapté pour mettre en oeuvre les étapes consistant à :
décoder et traiter un paquet de données (606) sur la base d'une procédure de décodage en combinaison avec une information de traitement (601, 602),
présenter les données sous la forme d'une représentation de données (702) dans la station de réception (140),
dans lequel le paquet de données (606) comporte des données codées et est de longueur maximale fixe et a été transmis à la station de réception (140),
dans lequel les données appartiennent à un groupe particulier de données,
dans lequel l'information de traitement (601, 602) se rapporte au groupe particulier de données et est mémorisée dans la station de réception,
dans lequel les données comportent une information concernant une activité d'un marché,
dans lequel l'information de traitement (601, 602) comporte une information concernant une plage d'un axe x, une plage d'un axe y, un marquage de l'axe x et un marquage de l'axe y de la représentation de données (702).
